# EUROPEAN PATENT APPLICATION

(11) **EP 2 581 599 A2**
(43) Date of publication of application: **17.04.2013**
(21) Application number: 12250160.4
(22) Date of filing: 08.10.2012
(51) Int. Cl.: F03B 11/00, F03B 17/04

(54) **Energy recovery during wastewater treatment**

(30) Priority: 11.10.2011 US 201161545642 P
(71) Applicant: Kang, Seoungil, Poughkeepsie, NY 12603 (US); Frankel, Thomas Edward, Poughkeepsie, NY 12603 (US); Ritter, Todd David, Poughkeepsie, NY 12603 (US)
(72) Inventor: Kang, Seoungil, Poughkeepsie, NY 12603 (US); Frankel, Thomas Edward, Poughkeepsie, NY 12603 (US); Ritter, Todd David, Poughkeepsie, NY 12603 (US)
(74) Representative: Sales, Robert Reginald

(57) **Abstract**

A system for recovering energy while treating a body of wastewater comprises a tank 110, a plurality of diffusers 150, a propeller 170, and a generator 190. The tank 110 contains the body of wastewater. The plurality of diffusers 150 is immersed in the body of wastewater and is operative to create motion therein by the discharge of bubbles. The propeller 170 is immersed in the body of wastewater and is operative to spin in response to the motion in the body of wastewater. The generator 190 is linked to the propeller 170 and is operative to generate electrical energy in response to the spinning of the propeller 170.

## Description

### FIELD OF THE INVENTION

The present invention relates generally to energy recovery during wastewater treatment, and, more particularly, to energy recovery from aerated wastewater treatment tanks.

### BACKGROUND OF THE INVENTION

Diffusers are conventionally used to support aerobic biological processes in wastewater treatment tanks. A diffuser typically comprises a disc-, tube-, or strip-shaped membrane, which is constructed of rubber or other similar materials and is punctured to provide a number of perforations in the form of holes or slits. In operation, pressurized air is sent through these perforations to create a plume of small bubbles. The bubbles rise through the wastewater and, in so doing, provide the surrounding wastewater with the oxygen needed to sustain the desired biological processes occurring therein. The rising bubbles also create motion in the wastewater, which aids in suspending solids (e.g., sludge) and mixing.

The pressurized air required to drive the diffusers in a wastewater treatment tank is usually produced by one or more air blowers. In many wastewater treatment plants, these air blowers may need to supply from about 1 - 500,000 cubic feet per minute of air at pressures sufficient to overcome dynamic heads of about 5 - 40 feet. Accordingly, these air blowers are typically large and consume large amounts of power. An air blower may, for example, consume about 0.085 kilowatt-hours (kwh) of energy for each cubic meter of tank volume to supply about 0.6 cubic meters of air per cubic meter of tank volume. The aeration aspects of a water treatment process may consume about 70% of the energy used by a wastewater treatment plant. For this reason, it would be highly advantageous to be able to recover some of this energy while, at the same time, not adversely affecting the treatment of the wastewater.

### SUMMARY OF THE INVENTION

Embodiments of the present invention address the above-identified needs by providing apparatus and methods for recovering energy during wastewater treatment. Advantageously, these apparatus and methods are operative to function without adversely affecting the treatment of the wastewater itself.

In accordance with aspects of the invention, a system for recovering energy while treating a body of wastewater comprises a tank, a plurality of diffusers, a propeller, and a generator. The tank contains the body of wastewater. The plurality of diffusers is immersed in the body of wastewater and is operative to create motion therein by the discharge of bubbles. The propeller is immersed in the body of wastewater and is operative to spin in response to the motion in the body of wastewater. The generator is linked to the propeller and is operative to generate electrical energy in response to the spinning of the propeller.

In accordance with additional aspects of the invention, a method of recovering energy while treating a body of wastewater comprises placing the body of wastewater in a tank. A plurality of diffusers is immersed in the body of wastewater and caused to create motion in the body of wastewater by the discharge of bubbles. In addition, a propeller is immersed in the body of wastewater and caused to spin in response to the motion in the body of wastewater. A generator is linked to the propeller and caused to generate electrical energy in response to the spinning of the propeller.

### BRIEF DESCRIPTION OF THE DRAWINGS

These and other features, aspects, and advantages of the present invention will become better understood with regard to the following description, claims, and accompanying drawings where:

FIG. 1 shows a partially cutaway perspective view of a portion of a wastewater treatment system in accordance with an illustrative embodiment of the invention;

FIG. 2 shows a partial sectional view of a portion of the FIG. 1 wastewater treatment system;

FIG. 3 shows a perspective view of an alternative propeller in accordance with an illustrative embodiment of the invention;

FIG. 4 shows a perspective view of a propeller with a conical deflector in accordance with an illustrative embodiment of the invention;

FIG. 5 shows a block diagram of an energy storage system in accordance with an illustrative embodiment of the invention;

FIG. 6 shows a perspective view of an arrangement for generating electrical energy from lateral motion in wastewater, in accordance with an illustrative embodiment of the invention; and

FIG. 7 shows a perspective of an arrangement for sharing kinetic energy within a system or between systems, in accordance with an illustrative embodiment of the invention.

### DETAILED DESCRIPTION OF THE INVENTION

The present invention will be described with reference to illustrative embodiments. For this reason, numerous modifications can be made to these embodiments and the results will still come within the scope of the invention. No limitations with respect to the specific embodiments described herein are intended or should be inferred.

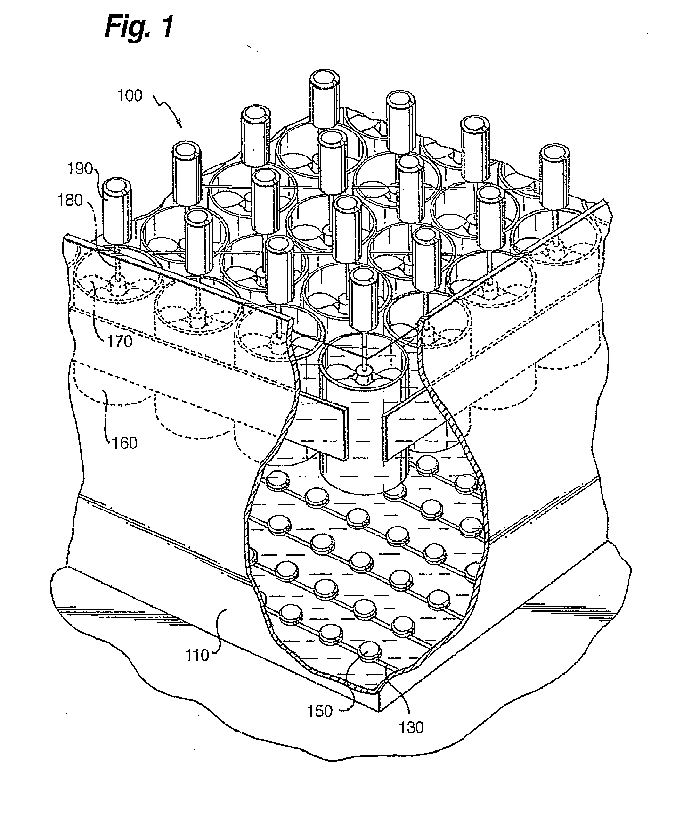

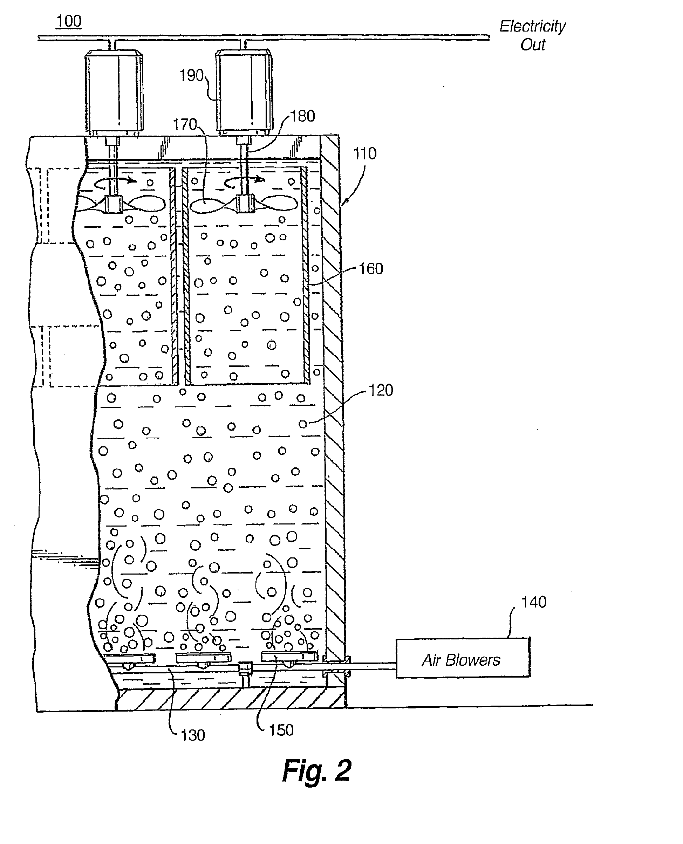

FIGS. 1 and 2 show portions of a wastewater treatment system 100 in accordance with an illustrative embodiment of the invention. More particularly, FIG. 1 shows a partially cutaway perspective view, while FIG. 2 shows a partial sectional view.

The wastewater treatment system 100 comprises a tank 110 which contains a body of wastewater 120 being treated. An array of conduits 130 is positioned near the bottom of the tank 110 and is fed pressurized air from a plurality of air blowers 140. The conduits 130 themselves support a series of diffusers 150 that are mounted on the conduits 130 and are in fluidic communication thereto. Moving upward, a matrix of cylindrical shrouds 160 is positioned near the top of the tank 110. Each of the cylindrical shrouds 160 has substantially vertical sidewalls and encircles a respective propeller 170, which is suspended near the top of its cylindrical shroud 160 by a respective linkage rod 180. The linkage rods 180, in turn, link each of the propellers 170 to a respective electrical generator 190 that is supported above the tank 110 by a suitable support structure (not explicitly shown). Each of the propellers 170 has a respective axis of rotation that is substantially perpendicular to the plane formed by the upper surface of the body of wastewater 120.

Conduits and diffusers suitable for use in implementing aspects of the invention are largely conventional and may be sourced from, for example, Stamford Scientific International Inc. (Poughkeepsie, New York, USA). The conduits 130 may comprise, for example, polyvinylchloride. The diffusers 150, in turn, may comprise diffuser bodies formed from, as another example, polypropylene or polyethylene on which are mounted flexible, perforated diffuser membranes. The diffuser membranes may comprise, for example, perforated ethylene-propylene-diene-monomer rubber, and may, in preferred embodiments, further comprise fluoroelastomer- or polytetrafluoroethylene-containing coatings or, alternatively, fluorine-modified upper surfaces, to inhibit contamination by the body of wastewater 120. When pressurized gas generated by the air blowers 140 is applied to such diffusers 150 via the conduits 130, the gas pressure expands the flexible diffuser membranes away from the diffuser bodies and causes their perforations to open so that the gas discharges through them in the form of fine bubbles. The bubbles subsequently rise through the body of wastewater 120 and, in so doing, provide the surrounding body of wastewater 120 with the oxygen needed to sustain the desired biological processes occurring therein. The rising bubbles also create motion in the body of wastewater 120, which aids in mixing. When the gas pressure is relieved, the flexible diffuser membranes collapse on the diffuser bodies to close the perforations and prevent the body of wastewater 120 from entering the diffuser bodies in the opposite direction. Generally, a flexible diffuser membrane configured in this way produces bubbles smaller than five millimeters in diameter. The resultant large ratio of surface area to volume in these bubbles promotes efficient oxygen mass transfer between the bubbles and the surrounding body of wastewater 120.

Wastewater treatment in such a manner is largely conventional and is described in, as just one example, F.L. Burton, Wastewater Engineering (McGraw-Hill College, 2002), which is hereby incorporated by reference herein. The provisioning, arrangement, and functioning of the cylindrical shrouds 160, the propellers 170, the linkage rods 180, and the electrical generators 190 in the wastewater treatment system 100 are, in contrast, entirely novel. A purpose of the cylindrical shrouds 160, the propellers 170, the linkage rods 180, and the electrical generators 190 is to recapture at least some of the energy supplied to the body of wastewater 120 through the combination of the air blowers 140, the conduits 130, and the diffusers 150.

More particularly, the cylindrical shrouds 160 act to capture the motion created in the body of wastewater 120 by the rising plumes of bubbles and to channel that motion towards the propellers 170. The propellers 170, in turn, spin about the longitudinal axes of the cylindrical shrouds 160 in response to this channeled motion. Finally, the linkage rods 180 transmit the spinning motion (i.e., rotational motion) of the propellers 170 to the electrical generators 190, which convert that motion into electrical energy. Without this energy recovery apparatus, the supplied energy is, instead, simply lost into the atmosphere above the upper surface of the body of wastewater 120.

The cylindrical shrouds 160, the propellers 170, and the linkage rods 180 may comprise plastic or metallic components, or a combination thereof. The electrical generators 190 may be commercially sourced and may be of the type wherein permanent magnets are moved relative to conductive coils, or vice versa, to create an electromotive force in the conductive coils.

In a preferred but non-limiting embodiment of the invention, the cylindrical shrouds 160 are mounted near the top of the tank 110 but below the upper surface of the body of wastewater 120. In the illustrative wastewater treatment system 100, the cylindrical shrouds 160 may, for example, be 8 - 10 feet in length and may be disposed about four feet below the upper surface. In addition, the cylindrical shrouds 160 are preferably placed more than about four feet above the diffusers 150.

Aerated wastewater treatment tanks are very complex hydrodynamic and biological systems. The above-described configuration, while non-limiting, is thereby informed by several significant and unexpected experimental observations made by the inventors while studying prototypes in a laboratory environment. It was experimentally observed, for example, that configuring a cylindrical shroud to break the upper surface of the wastewater appeared to reduce the efficiency of the wastewater treatment. This suggests that it is unfavorable to the wastewater treatment process to interfere with the mixing and the gas-liquid interface at the uppermost surface of the wastewater. Moreover, it was also experimentally observed that the motion transferred from wastewater to a propeller held above a diffuser was diminished when the propeller was less than about 3 - 4 feet above the diffuser. Here, it is postulated that the bubbles produced at the diffusers require some vertical distance to fully transfer their upward motion to the surrounding wastewater.

The inclusion of the cylindrical shrouds 160 in the illustrative wastewater treatment system 100 is also in response to the same experiments. The experiments unexpectedly showed, for example, that the use of a propeller without an encircling cylindrical shroud captured substantially less motion from the wastewater than a configuration with the cylindrical shroud in place. This effect appears to be due to the channeling properties of the cylindrical shrouds 160, which effectively vector the motion of the wastewater into a largely upward direction.

Advantageously, a wastewater treatment system like the wastewater treatment system 100 shown in FIGS. 1 and 2, and, more generally, systems in accordance with aspects of the invention, allow at least some of the energy utilized to supply the diffusers 150 with pressurized air to be recovered without adversely affecting the treatment of the body of wastewater 120. Estimations suggest that energy recovery may be as high as about 25% of the electric usage of the air blowers 140. This is a substantial percentage when one considers that a typical air blower may only be 85% efficient and, of that, about 50% of the energy may be required to keep the body of wastewater 120 mixed and any sludge from settling.

It should again be emphasized that the above-described embodiments of the invention are intended to be illustrative only. Other embodiments can use different types and arrangements of elements for implementing the described functionality. These numerous alternative embodiments within the scope of the invention will be apparent to one skilled in the art.

In one or more other embodiments of the invention, for example, alternative diffuser designs such as, but not limited to, tube- and strip-type diffusers may be utilized in addition to or as a replacement for the disk diffusers shown in FIG. 1.

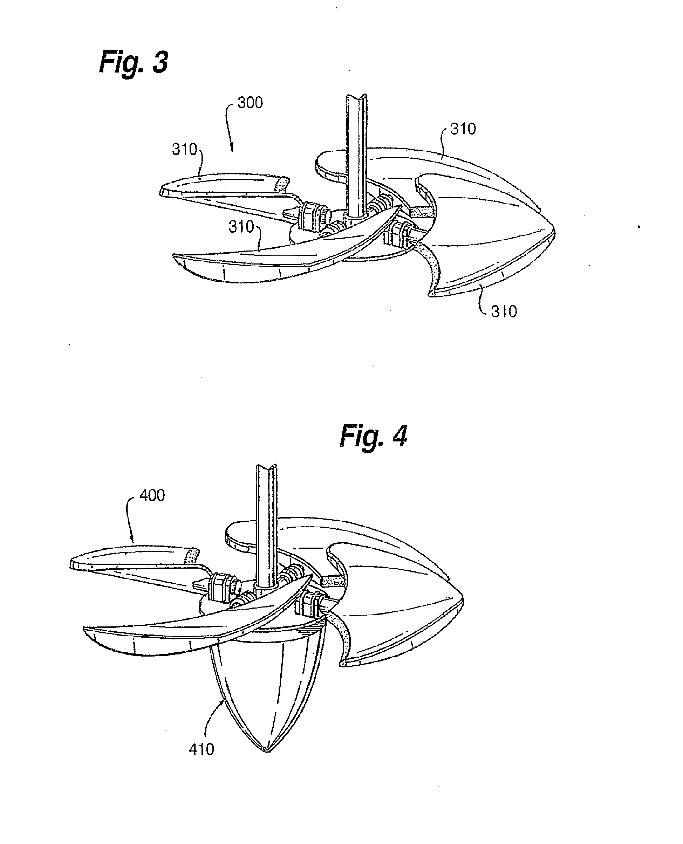

In addition, other embodiments within the scope of the invention may utilize propeller designs different from the particular propeller design shown in FIG. 1. Such alternative propeller designs include, but are not limited to, those having teeth, screws, gears, and/or vanes for capturing the motion of the wastewater. Such alternative propellers may include, as just a more particular example, paddle-wheel type propellers and the like. Moreover, it is further recognized that propellers in use in wastewater treatment applications may, under some circumstances, be susceptible to being encumbered by debris in the wastewater, particularly rags and string that have the propensity to wrap around moving parts. Modified propeller assemblies that are less susceptible to such effects may therefore be desirable. FIGS. 3 and 4 show respective perspective views of two such modified propeller designs in accordance with alternative illustrative embodiments of the invention. In FIG. 3, a propeller 300 comprises four broadly-shaped blades 310 that are configured somewhat like the head of a round point shovel, that is, with each blade 310 having its largest width near the center of the propeller 300 and a rounded tip at a point farthest away from the center of the propeller 300. Here, the broadness of the blades 310 helps in preventing rags and string from wrapping around the blades 410. In FIG. 4, a propeller 400 (shown in this particular embodiment to be similar in design to the propeller 300) has a conical deflector 410. In this embodiment, the conical deflector 310 acts to keep any rags and string away from the central hub and narrower attachment points of the propeller blades where there is a greater chance that such debris may wrap itself.

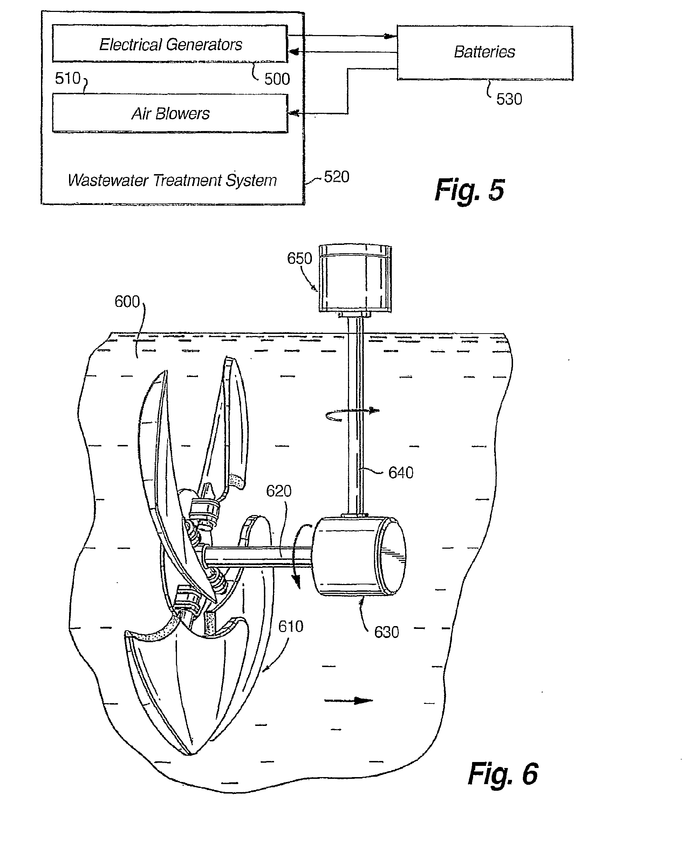

In even one or more additional alternative embodiments of the invention, electrical storage devices such as batteries may be utilized to store the energy recovered from a wastewater treatment system like the wastewater treatment system 100 described above. FIG. 5 shows a block diagram of such an arrangement. In this exemplary embodiment, electrical generators 500 and air blowers 510 of a wastewater treatment system 520 similar to the wastewater treatment system 100 are connected to batteries 530. As indicated in the figure by arrows, electrical energy can flow along several different paths. The electrical generators 500 can charge the batteries 530. In addition, during, for example, a power outage, the batteries 530 can supply power to the air blowers 140. Lastly, power from the batteries 530 can be supplied to the electrical generators 500 in order to have the generators spin the propellers for the purpose of mixing the wastewater in the wastewater treatment system 520 without relying on external electrical power.

While the propellers 170 in the wastewater treatment system 100 were arranged so as to predominantly capture vertical motion in the body of wastewater 120, propellers can additionally or alternatively be arranged so that they are operative to capture lateral motion in a body of wastewater. An illustrative embodiment of such an arrangement is shown in FIG. 6. FIG. 6 shows a perspective view of a portion of a body of wastewater 600 in an exemplary wastewater treatment system. A propeller 610 is immersed in the body of wastewater 600 so that its axis of rotation is substantially parallel to the upper surface of the body of wastewater 600. The propeller 610 is thereby operative to spin in response to lateral motion in the body of wastewater 600. A cylindrical shroud similar to the cylindrical shroud 160, but oriented laterally, may optionally be made to encircle the propeller 610 if desired (not shown). In use, a first linkage rod 620 transmits the rotational motion of the propeller to a gearbox 630. The gearbox 630, in turn, converts the rotational motion of the first linkage rod 620 into rotational motion of a second linkage rod 640, which has an axis of rotation perpendicular to the axis of rotation of the first linkage rod 620. The rotational motion of the second linkage rod 640 is transmitted to a generator 650, which converts that motion into electrical energy.

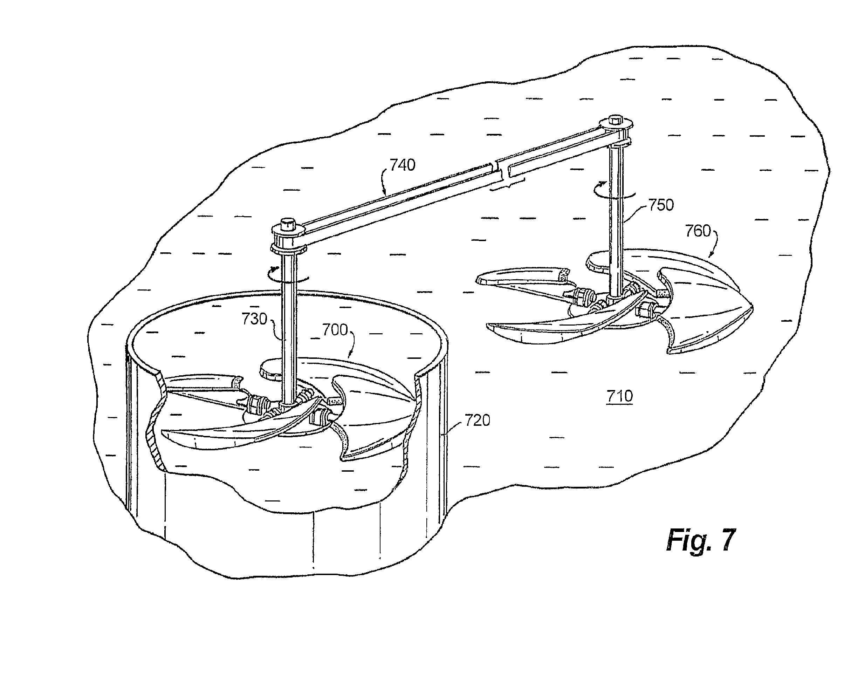

Lastly, while the above-described embodiments have focused on actuating generators to produce electrical energy, alternative embodiments of the invention may be arranged to share kinetic energy between elements of the same wastewater treatment tank or elements of separate wastewater treatment tanks. A perspective view of an illustrative embodiment of such an arrangement is shown in FIG. 7. In this exemplary system, a propeller 700, immersed in a body of wastewater 710 and encircled by a cylindrical shroud 720, is made to spin in response to upward motion in that body of wastewater 710. The upward motion may be a result of bubbles generated by diffusers (not specifically shown), as was the case in the wastewater treatment system 100. The rotational motion of the propeller 700 is transmitted via a first linkage rod 730 to a belt 740. The belt 740, in turn, transmits the rotational motion to a second linkage rod 750, which causes a slave propeller 760 to spin in a different region of the body of wastewater 710. The slave propeller 760 may thereby act to mix the body of wastewater 710 solely in response to energy recovered from the propeller 700. In the present embodiment, the propeller 700 and the slave propeller 760 are shown to occupy the same tank, but, in alternative embodiments, they may instead occupy different tanks.

In closing, it should again be emphasized that all the features disclosed herein may be replaced by alternative features serving the same, equivalent, or similar purposes, unless expressly stated otherwise. Thus, unless expressly stated otherwise, each feature disclosed is one example only of a generic series of equivalent or similar features.

Moreover, all the features disclosed herein may be replaced by alternative features serving the same, equivalent, or similar purposes, unless expressly stated otherwise. Thus, unless expressly stated otherwise, each feature disclosed is one example only of a generic series of equivalent or similar features.

Finally, any element in a claim that does not explicitly state "means for" performing a specified function or "step for" performing a specified function is not to be interpreted as a "means for" or "step for" clause as specified in 35 U.S.C. §112, ¶6. In particular, the use of "step of" in the claims herein is not intended to invoke the provisions of 35 U.S.C. §112, ¶6.

## Claims

1. A system for recovering energy while treating a body of wastewater, the system comprising:
a tank, the tank containing the body of wastewater;
a plurality of diffusers, the plurality of diffusers immersed in the body of wastewater and operative to create motion therein by a discharge of bubbles;
a propeller, the propeller immersed in the body of wastewater and operative to spin in response to the motion in the body of wastewater; and
a generator, the generator linked to the propeller and operative to generate electrical energy in response to the spinning of the propeller.

2. A system according to claim 1, wherein the propeller is positioned higher in the tank than the plurality of diffusers.

3. A system according to claim 2, wherein the propeller is positioned at least about three feet (91.4cm) higher in the tank than a nearest diffuser in the plurality of diffusers.

4. A system according to any of the preceding claims, wherein the propeller has an axis of rotation substantially perpendicular to an upper surface of the body of wastewater.

5. A system according to any of claims 1 to 3, wherein the propeller has an axis of rotation substantially parallel to an upper surface of the body of wastewater.

6. A system according to any of the preceding claims, further comprising a linkage rod, the linkage rod spanning between the propeller and the generator.

7. A system according to claim 6, wherein the linkage rod substantially runs along an axis of rotation of the propeller.

8. A system according to claims 6 or 7, wherein the linkage rod is operative to transmit a spinning motion of the propeller to the generator.

9. A system according to any of the preceding claims, further comprising a cylindrical shroud, the cylindrical shroud encircling the propeller, the cylindrical shroud may describe a hollow cylinder, and the hollow cylinder may define a longitudinal axis that is substantially coaxial with an axis of rotation of the propeller.

10. A system according to claim 9, wherein the cylindrical shroud is positioned below an upper surface of the body of wastewater.

11. A system according to any of the preceding claims, further comprising a battery, the battery electrically connected to the generator and operative to store at least some of the electrical energy generated by the generator.

12. A method for recovering energy while treating a body of wastewater, the method comprising the steps of:
placing the body of wastewater in a tank;
immersing a plurality of diffusers in the body of wastewater and causing the plurality of diffusers to create motion in the body of wastewater by a discharge of bubbles;
immersing a propeller in the body of wastewater and causing the propeller to spin in response to the motion in the body of wastewater; and
linking a generator to the propeller and causing the generator to generate electrical energy in response to the spinning of the propeller.

13. A method according to claim 12, wherein the propeller has an axis of rotation substantially perpendicular to an upper surface of the body of wastewater.

14. A method according to claim 12, wherein the propeller has an axis of rotation substantially parallel to an upper surface of the body of wastewater.

15. A method according to any off claims 12 to 14, further comprising the step of encircling the propeller with a cylindrical shroud, the cylindrical shroud may describe a hollow cylinder, the hollow cylinder may define a longitudinal axis that is substantially coaxial with an axis of rotation of the propeller, and the cylindrical shroud may be positioned below an upper surface of the body of wastewater.
